# EUROPEAN PATENT APPLICATION

(11) **EP 3 431 885 A1**
(43) Date of publication of application: **23.01.2019**
(21) Application number: 18184620.5
(22) Date of filing: 20.07.2018
(51) Int. Cl.: F24D 3/14

(54) **SURFACE HEAT-TRANSFER APPARATUS AND METHOD FOR PROVIDING IT**

(30) Priority: 21.07.2017 GB 201711772
(71) Applicant: Timoleon Limited, Exeter, Devon EX2 5GL (GB)
(72) Inventor: TRIVETT, Darren, Exeter, Devon EX2 5GL (GB)
(74) Representative: Script IP Limited

(57) **Abstract**

A surface heat-transfer apparatus and method are disclosed. The surface heat-transfer apparatus comprises: a first sheet having a first channel for receiving a pipe carrying a heat-transfer fluid, the first channel having a first depth which is less than a diameter of the pipe. In this way, the space occupied by the apparatus is less than existing arrangements which typically have a channel depth which is greater than the diameter of the pipe.

## Description

### FIELD OF THE INVENTION

The present invention relates to a surface heat-transfer apparatus and method.

### BACKGROUND

Surface heat transfer is used for heating and cooling spaces in buildings. One example is an underfloor, in-ceiling or in-wall heating or cooling system. A structure is provided into which pipes are received. The pipes carry a circulating fluid. Heat exchange occurs between the room and the fluid in the pipe to cool or heat the room.

In some installations, the pipes are embedded within a solid structure, such as within a concrete floor over which appropriate flooring material is placed. In other installations the pipes are located.

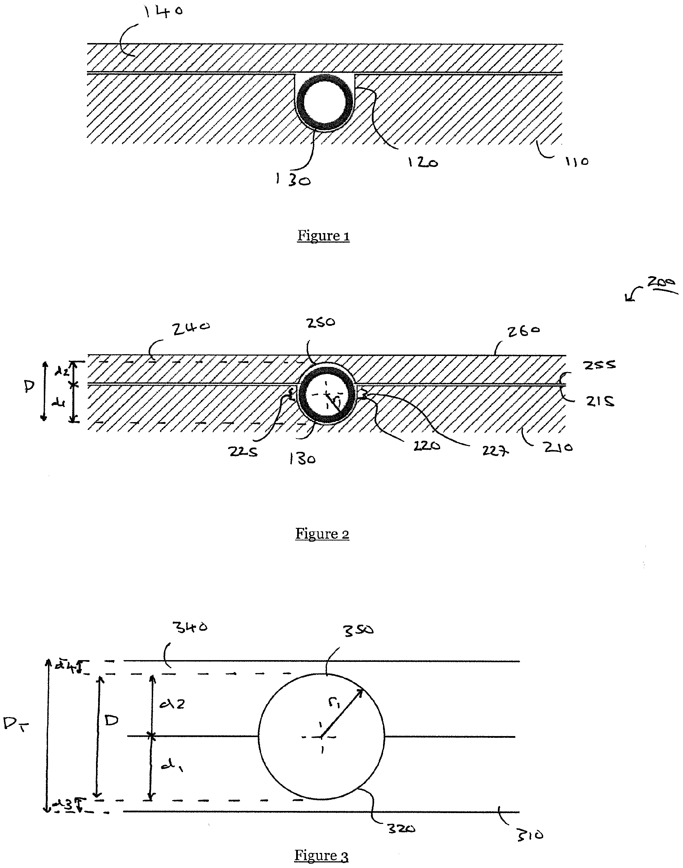

As shown in Figure 1, diffuser sheets 110 (either the body of the sheet itself, when conductive, or a conductive sheet bonded to the body of the sheet) are commonly used for distribution of heat in dry construction floors (i.e. those without a concrete screed). Diffuser sheets 110 are typically made from a substrate material and have channels 120 which accept a pipe 130 which transfers heat into the floor. A covering 140 is laid over the diffuser sheets 110, e.g. a floor deck such as chipboard in an underfloor heating system. Conventionally, the pipe 130 is installed in straight runs with curves (where the pipe turns 180 degrees to travel back down the room) at the periphery of the room in a serpentine fashion (going up and down within a room).

The present invention seeks to make installation of surface heating and cooling panels easier enabling greater flexibility in the installation of pipe work.

### SUMMARY

According to a first aspect, there is provided a surface heat-transfer apparatus, comprising: a first sheet having a first channel for receiving a pipe carrying a heat-transfer fluid, the first channel having a first depth which is less than a diameter of the pipe.

The first aspect recognises that a problem with existing arrangements is that the space occupied by the heat-transfer apparatus is greater than it need be, which makes installing such heat-transfer apparatus more problematic than it need be.

Accordingly, a heat-transfer apparatus may be provided. The heat-transfer apparatus may be a surface heat-transfer apparatus. The apparatus may comprise a first or initial sheet. The first sheet may have a first or initial channel which may receive a pipe. The pipe may carry a heat-transfer fluid. The channel may have a depth which is less than, or no greater than, the diameter of the pipe. In this way, the space occupied by the apparatus is less than existing arrangements which typically have a channel depth which is greater than the diameter of the pipe.

In one embodiment, the apparatus comprises a second sheet having a second channel for receiving the pipe, the second channel having a second depth which is less than the diameter of the pipe. Accordingly, a second or overlying sheet may be provided which has a channel. The channel may receive the pipe. The channel may also have a depth which is no greater than the diameter of the pipe. Accordingly, the two sheets together may retain the pipe therebetween, within their channels, and the combined depth of the two sheets is typically less than existing arrangements.

In one embodiment, at least one of the first channel and the second channel are recessed into a major surface of a respective one of the first sheet and the second sheet. Accordingly, the channels may be formed into the surfaces of the sheets.

In one embodiment, the pipe, when received in at least one of the first channel and the second channel, protrudes beyond a respective major surface. Accordingly, the pipe may project or stick-out beyond the channels. That is to say, the pipe may not be fully-received within either of the channels.

In one embodiment, the first sheet and the second sheet are located with the first channel opposing the second channel to surround the pipe when received therein. Accordingly, the channels may be co-located such that together they enclose the pipe.

In one embodiment, the first depth combined with the second depth is no less than the diameter of the pipe. Accordingly, the combined depth of the two channels may be selected to match or equal the diameter of the pipe.

In one embodiment, a width of at least one of the first channel and the second channel is one of no less than, matching and less than a diameter of the pipe. Accordingly, the width of the first channel may be greater than, equal to, or less than the diameter of the pipe. Likewise, the width of the second channel may be greater than, equal to, or less than the diameter of the pipe.

In one embodiment, at least one of the first depth and the second depth is no less than one of a radius of the pipe and the width. Accordingly, the first depth may be greater than, or equal to, the radius of the pipe or greater than, or equal to, the width. Likewise, the second depth may be greater than, or equal to, the radius of the pipe or may be greater than, or equal to, the width.

In one embodiment, at least one of the first depth and the second depth matches one of a radius of the pipe and the width. Accordingly, the first depth may match either the radius of the pipe or the width. Likewise, the second depth may match either the radius of the pipe or the width.

In one embodiment, at least one of the first depth and the second depth is less than one of a radius of the pipe and the width. Accordingly, the first depth may be smaller than either the radius of the pipe or the width. Likewise, the second depth may be smaller than the radius of the pipe or the width.

In one embodiment, a depth of at least one of the first sheet and the second sheet comprises a respective one of the first depth and the second depth plus a respective one of a first channel structural depth and a second channel structural depth. Accordingly, the combined depth of the sheets may be selected to be the diameter of the pipe plus a structural amount required for each sheet.

In one embodiment, the apparatus comprises gripping elements operable to grip the pipe when received in at least one of the first channel and the second channel. Accordingly, elements may grip the pipe when received in the first channel and/or the second channel.

In one embodiment, at least one of the first channel and the second channel deviates in a direction which is transverse to a longitudinal channel axis to provide the gripping elements. Accordingly, a deviation or change in direction of the first channel and/or the second channel may provide the gripping between the pipe and the channel.

In one embodiment, at least one of the first channel and the second channel deviates alternately opposing directions transverse to the longitudinal channel axis to provide the gripping elements. Accordingly, the channel may undulate or weave in different directions to provide the gripping.

In one embodiment, at least one of the first channel and the second channel deviates by less than a thickness of a wall of the pipe.

In one embodiment, the apparatus comprises at least one of a plurality of the first channels and a plurality of the second channels. Accordingly, more than one channel may be provided in each sheet.

In one embodiment, at least one of the plurality of the first channels and the plurality of the second channels comprise non-linear, interconnecting channels.

In one embodiment, the first channel defines a first pattern in the major surface of the first sheet and the second channel defines a second, mirrored pattern in the major surface of the second sheet. Accordingly, in order to enable the channels to be co-located or opposing, the channels form mirrored or corresponding patterns on the respective major surfaces of the sheets.

In one embodiment, at least one of the first sheet and the second sheet comprise a conductive layer thermally coupleable with the pipe.

In one embodiment, at least one of the first sheet and the second sheet comprise at least one of a cellulose, fibre, polymer, rubber, acoustic and cementitious board.

In one embodiment, the major surface of at least one of the first sheet and the second sheet comprises an interlock structure operable to interlock with a complementary interlock structure on another of the first sheet and the second sheet. Accordingly, the two sheets may interlock with each other to help retain the sheets in place without the need for additional fixings.

In one embodiment, a depth of at least one of the first sheet and the second sheet and another of the first sheet and the second sheet varies to provide the interlock structure and the complementary interlock structure. Accordingly, opposing castellations may be formed onto major surfaces of the sheets to interlock the sheets together.

In one embodiment, an increase in depth of one of the first sheet and the second sheet is matched with a decrease in depth in another of the first sheet and the second sheet.

In one embodiment, the apparatus comprises the pipe.

According to a second aspect, there is provided a method, comprising: providing a first sheet having a first channel for receiving a pipe carrying a heat-transfer fluid, the first channel having a first depth which is less than a diameter of the pipe.

In one embodiment, the method comprises selecting the first depth of the first channel to be less than the diameter of the pipe.

In one embodiment, the method comprises providing a second sheet having a second channel for receiving the pipe, the second channel having a second depth which is less than the diameter of the pipe.

In one embodiment, the method comprises and selecting the second depth of the second channel to be less than the diameter of the pipe.

In one embodiment, the method comprises recessing at least one of the first channel and the second channel into a major surface of a respective one of the first sheet and the second sheet.

In one embodiment, the pipe, when received in at least one of the first channel and the second channel, protrudes beyond a respective major surface.

In one embodiment, the method comprises locating the first sheet and the second sheet with the first channel opposing the second channel to surround the pipe when received therein.

In one embodiment, the method comprises selecting the first depth when combined with the second depth to be no less than the diameter of the pipe.

In one embodiment, the method comprises selecting a width of at least one of the first channel and the second channel to be one of no less than, matching and less than a diameter of the pipe.

In one embodiment, the method comprises selecting at least one of the first depth and the second depth to be no less than one of a radius of the pipe and the width.

In one embodiment, the method comprises selecting at least one of the first depth and the second depth to match one of a radius of the pipe and the width.

In one embodiment, the method comprises selecting at least one of the first depth and the second depth to be less than one of a radius of the pipe and the width.

In one embodiment, the method comprises selecting a depth of at least one of the first sheet and the second sheet to be a respective one of the first depth and the second depth plus a respective one of a first channel structural depth and a second channel structural depth.

In one embodiment, the method comprises providing gripping elements operable to grip the pipe when received in at least one of the first channel and the second channel.

In one embodiment, the method comprises deviating at least one of the first channel and the second channel in a direction which is transverse to a longitudinal channel axis to provide the gripping elements.

In one embodiment, the method comprises deviating at least one of the first channel and the second channel in alternately opposing directions transverse to the longitudinal channel axis to provide the gripping elements.

In one embodiment, the method comprises deviating at least one of the first channel and the second channel by less than a thickness of a wall of the pipe.

In one embodiment, the method comprises providing at least one of a plurality of the first channels and a plurality of the second channels.

In one embodiment, the method comprises providing at least one of the plurality of the first channels and the plurality of the second channels as non-linear, interconnecting channels.

In one embodiment, the method comprises defining a first pattern with the first channel as first pattern in the major surface of the first sheet and defining a second, mirrored pattern with the second channel in the major surface of the second sheet.

In one embodiment, the method comprises providing at least one of the first sheet and the second sheet with a conductive layer thermally coupleable with the pipe.

In one embodiment, at least one of the first sheet and the second sheet comprise at least one of a cellulose, fibre, polymer, rubber, acoustic and cementitious board.

In one embodiment, the method comprises providing the major surface of at least one of the first sheet and the second sheet with an interlock structure operable to interlock with a complementary interlock structure on another of the first sheet and the second sheet.

In one embodiment, the method comprises varying a depth of at least one of the first sheet and the second sheet and another of the first sheet and the second sheet to provide the interlock structure and the complementary interlock structure.

In one embodiment, the method comprises matching an increase in depth of one of the first sheet and the second sheet with a decrease in depth in another of the first sheet and the second sheet.

In one embodiment, the method comprises providing the pipe.

In one embodiment, the method comprises placing the first sheet on an underlying surface, locating the pipe in the first channel and placing the second sheet over the pipe and first sheet.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates a diffuser sheet;
Figure 2 illustrates a partial cross-section through a surface heat-transfer apparatus according to one embodiment;
Figure 3 shows a generalised arrangement of channels of initial and overlying sheets according to one embodiment;
Figure 4 illustrates an arrangement of an initial sheet and an overlying sheet according to one embodiment;
Figure 5 illustrates a surface heat-transfer apparatus according to one embodiment; and
Figure 6 is a schematic diagram illustrating a deviation in the direction of a channel to improve retention of a pipe therein.

### DESCRIPTION OF THE EMBODIMENTS

Before discussing embodiments in any more detail, first an overview will be provided. Embodiments provide an arrangement where the space occupied by the heat-transfer apparatus is less than that of existing arrangements. This is achieved by the sheets of the heat-transfer apparatus sharing a channel into which a pipe is fitted. This enables at least one of the sheets to have a reduced depth since it no longer needs to fully receive the pipe therein. Instead, the pipe may protrude from the surface of each sheet and this protrusion may be accommodated within a recess formed in the other sheet. Typically, the depth of the channel of the sheet which first receives the pipe therein is selected to be at least the radius of the pipe in order that the pipe may abut tangentially against the sides of the channel in order to hold the pipe in place initially. The cross-section of the channel is typically selected to match that of the cross-section of the pipe. Also, the width of the channel is typically selected to match the width of the pipe when received in the channel in order to provide a slight friction fit between the pipe and the channel. Typically, the depth of the channel in the overlying sheet will be slightly less than the radius of the pipe, in order that the proportion of the pipe protruding from the initial sheet may be fully received therein. The cross-section of the channel also typically matches the cross-section of the pipe. The width of the channel is typically selected to match the width of the proportion of the pipe received therein. Typically, it is unnecessary for the conduit of the overlying sheets to provide a friction fit on the pipe. The arrangement of the channel of at least the initial sheet may be such that the elongate axis of the channel varies off-axis, such that the channel follows an almost serpentine-like path. Typically, the deviations off-axis are small, typically much less than even the thickness of the pipe wall. Such deviation in the channel path helps to provide contact points to enhance the retention of the pipe within the initial sheet. Through this arrangement, it can be seen that the combined thickness of the initial sheet and the overlying sheet can be minimised to typically slightly greater than the diameter of the pipe.

### Heat-Transfer Apparatus

Figure 2 illustrates a partial cross-section through a surface heat-transfer apparatus, generally 200, according to one embodiment. An initial sheet 210 is provided which has a channel 220 defined therein. The depth d1 of the channel is selected to be slightly greater than the external radius r1 of the pipe 130 to be received therein. The cross-section of the channel 220 is shaped to match the external shape of the pipe 130 when received therein. Selecting the depth d1 to be slightly greater than the external radius r1 helps to ensure tangential contact between the external surface of the pipe 130 in the regions 225, 227 of the channel 220. Although in this embodiment the cross-section of the channel 220 is formed from a semicircle and tangentially extending linear parts in the regions 225, 227, it will be appreciated that the regions 225, 227 could be formed from a major circular segment.

Typically, the interfacing major surface 215 of the initial sheet 210 is provided with a conductive material which contacts the external surface of the pipe 130 in order to enhance heat conduction from the pipe 130 along the interfacing major surface 215. Typically, that material extends into the channel 220.

The initial sheet 210 is formed from a suitable material such as cellulose, fibre, polymer, rubber, acoustic board or cementitious board, depending on the application.

The overlying sheet 240 is provided with a corresponding channel 250. The channel 250 is located to match the location and configuration of the channel 220. The depth d2 of the channel 250 needs only to accommodate the height by which the pipe 130 protrudes above the interfacing major surface 215 of the initial sheet 210. In this embodiment, the depth d2 of the channel 250 is significantly less than the external radius r1 of the pipe 130. The combine depths d1, d2 match the external diameter D of the pipe 130. The cross-section of the conduit 250 matches the external cross-section of the pipe 130 and so is a minor circular segment. The overlying board 240 may be made of a suitable material, as mentioned above.

In use, the structure (such as a floor, wall or ceiling) which is to receive the surface heat-transfer apparatus is prepared, the initial sheet 210 is placed thereon and fixed in place if required. The pipe 130 is then introduced into the channel 220. The pipe 130 is then typically held in place through the close fit between the external surface of the pipe 130 and the regions 225, 227. Typically, the heat-conductive material on the interfacing major surface 215 extends into the channel 220. Placing the pipe 130 into the channel causes the heat-conductive material to contact with the external surface of the pipe 130. While the pipe 130 is held in position by the channel 220, the overlying sheet 240 is positioned and placed over the pipe 130. The interfacing major surface 255 of the overlying sheet 240 may also be provided with a heat-conductive material which extends into the channel 250 in order to provide for enhanced heat conductivity from the external surface of the pipe 130 across the interfacing major surface 255. Adding the overlying sheet 240 encloses the pipe 130 and retains it in place, while presenting a usable surface 260 through which the heat transfer can occur. That surface 260 may then be finished using appropriate materials such as paint, varnish, wax, tiles, carpet or the like.

### Channel Dimensioning

Figure 3 shows a generalised arrangement of the channels 320, 350 of the initial and the overlying sheets 310, 340. As can be seen, for a pipe having the external diameter D and radius r1, the combined depth d1, d2 of the channels 320, 350 will typically match that of the diameter D. As the depth di is varied, the depth d2 also varies such that d1 + d2 ≮ D. The total depth Dt of the initial sheet and overlying sheet is typically set by the diameter D of the pipe 130 plus minimum distances d3, d4 required to maintain the structural integrity of the sheets 310, 340. It will be appreciated that the depths d3, d4 will vary depending on the composition of the sheets 310, 340 and their intended use.

### Sheet Configuration

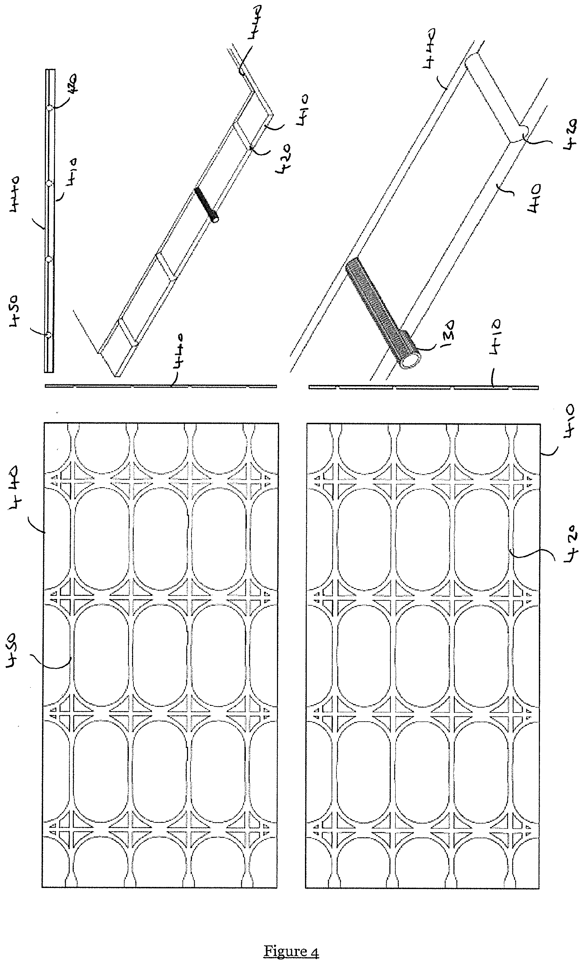

Figure 4 illustrates in more detail an arrangement of an initial sheet 410 and an overlying sheet 440, according to one embodiment. As can be seen, the sheets 410, 440 are provided with a plurality of channels 420, 450 which extend across a major surface 415, 455 of the sheets 410, 440. The sheets 410, 440 are provided with longitudinally-extending portions of the channels 450, 420, as well as curved and intersecting portions in order to allow the pipe 130 to be routed suitably within the building. It will be appreciated that any layout of channels may be provided.

### Interlocking Sheets

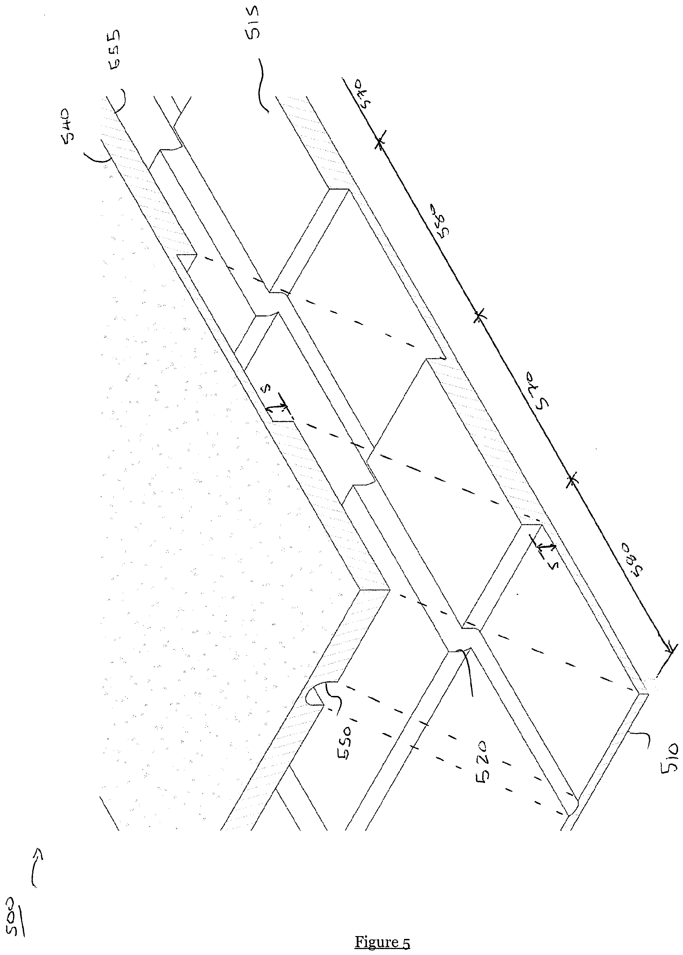

Figure 5 illustrates a surface heat-transfer apparatus, generally 500, according to one embodiment. The configuration of this heat-transfer apparatus 500 is similar to that mentioned above. However, the arrangement of the major surfaces 515, 555 of the initial sheet 510 and the overlying sheet 540 is stepped in order to provide for interlocking between the initial sheet 510 and the overlying sheet 540, which may avoid the need for fixings to be inserted to fix the initial sheet 510 to the overlying sheet 540.

As can be seen, the depth and profile of the channel 520 in the initial sheet 510 in the section 570 is selected to match that described in Figure 2 above, with the depth d1 matching or slightly exceeding the external radius r1 of the pipe 130. The depth d2 of the channel 550 in the overlying sheet 540 in the region 570 is selected to be less than the external radius r1 of the pipe 130 shown in Figure 2 above. However, in the region 580, the major surface 215 is stepped down by a height S and so the depth of the channel 520 in the region 580 is reduced to d1 - S. The height of the major surface 555 of the overlying sheet 540 in the region 580 is likewise increased by the height S, and so the depth of the channel 550 in the region 580 increases to d2 + S.

These interlocking regions help fix the underlying sheet 510 to the overlying sheet 540 without the need for additional fixings. Although in this embodiment there is a uniform distribution of regions 570, 580, it will be appreciated that this need not be the case and that just one interlocking region may be sufficient and that the length of the interlocking regions 570, 580 may be unequal.

### Gripping Elements

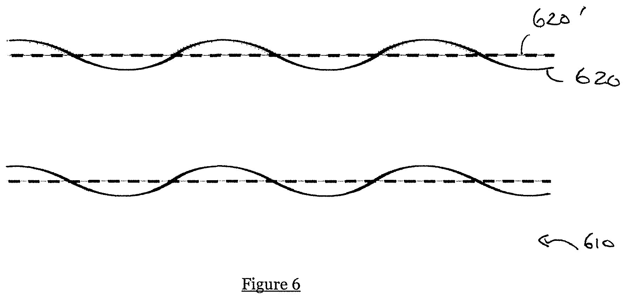

Figure 6 is a schematic diagram, which is not to scale, which illustrates an optional deviation in the direction of the channel 620. Although not necessary, such a deviation helps to improve retention of the pipe therein. This improves the ease of installation and increases the acceptable tolerance in the router channel width (so that the pipe will not be too difficult to push in or not gripped). As can be seen, the location of a typical linear channel 620' is shown, which may be provided on the surface of the underlying sheet 610. However, as the channel 620 extends across the initial sheet 610, it deviates from being linear, typically with a slight sinusoidal variation, which is shown in exaggerated form in Figure 6 to aid understanding. This slight sinusoidal variation helps to enhance contact between the outer surface of the pipe and the channel 620 to help retain the pipe therein.

Hence, embodiments provide a non-linear channel of a particular s-shape to be able to retain the pipe with even less channel depth than existing arrangements which leads to a thinner product. This is because the underfloor heating pipe, when inserted, wishes to maintain a linear path, but the channel forces the pipe to deviate causing it to be gripped. The channel is wider than the pipe to allow this to happen (this also makes installation easier - pipes do not need hammering in or become too loose in the channel). Unlike in existing arrangements which use jaws to provide the grip, which are necessary to hold the pipe, in embodiments jaws are not necessary. The interference from the s-shaped channel provide the necessary grip.

In some existing arrangements, the only way the pipe can be installed in those existing arrangements is to have it assembled in a factory. Plastic underfloor heating pipe installed on a construction site requires something to grip it. Hence, the channel depth in other existing arrangements must be sufficiently deep to completely retain the pipe and prevent its protrusion leading to a deep panel unsuitable for retrofit applications.

In embodiments, one sheet is laid first onto the floor, then the pipe is inserted into the channels and retained by the grip provided by the channels, the second layer can then be installed later. This means that the lower layer (and the channel it goes into) has to be sufficiently deep to be able to provide enough interference fit to hold the pipe.

In embodiments, the pipe would be less than 16mm and typically 8mm to 10mm. The channel width will be greater than the width of the pipe. The depth of the channel will be less than the diameter of the pipe and no less than the radius.

Embodiments provide a low build up underfloor heating panel that can be retrofitted in any floor - this is made possible by the use of the gripping method to reduce the heights (depths) of the two panels (sheets). If the overall (combined) height (of the complete arrangement, including the two panels) is greater than 20mm it becomes very difficult to install without changes to doors, stairs and other fixtures and fittings. With an overall height around 12mm, embodiments can be installed in any floor situation in much the same way as a floor finish would be.

Accordingly, it can be seen that embodiments reduce the height of an underfloor heating system. Typical underfloor heating systems have pipe wholly within a holding substrate that then has a covering layer laid over. This has a larger thickness (increasing the height of the floor) compared to embodiments. Embodiments have a routed channel only deep enough to retain the pipe and with a 'wiggle' pattern that also helps to retain the pipe in the channel. This 'holding' substrate is then covered by a second layer that has a mirror of the channel pattern used in the substrate. As the 'holding' substrate and covering layer are thinner the floor height is reduced which overcomes one of the major problems for the use of underfloor heating in retrofit applications. The wiggle means that the pipe channel has much more margin of error than a simple straight routed channel which has to be very precise in the way it is cut. Too narrow and it will be difficult for the pipe to go into the channel. Too wide and the pipe will not be held. With a 'wiggle' the pipe will be held when slightly too wide for conventionally-routed channels.

Embodiments provide a holding substrate panel with a routed pipe channel than just holds the pipe in place. A routed channel with a 'wiggle' allows the pipe to be gripped more effectively. A second covering panel has the routed channel with the same pattern as the holding pattern but mirrored. The covering panel does not need to hold the pipe. The router pattern in the holder and covering layer are the same. Where the holder material is not sufficiently conductive an aluminium layer can be applied across either the face of the holder or the covering panel so that heat can be transferred into the floor. The covering layer with routed channels could be a finished wood floor such as a laminate. If this type of covering layer were used and replaced an existing 7mm laminate floor finish then the additional height to include an underfloor heating system could be as low as 5mm.

Embodiments alleviate problems with the uptake of underfloor heating which has been restricted by the difficulty of replacing radiators with underfloor heating. For simple installations, the underfloor heating needs to be laid over the existing floor construction. However existing underfloor heating systems, with a finished covering layer, tend to be more than 20mm thick - because the holder layer totally encapsulates the pipe. This makes them difficult to use as an overlay to an existing floor as thresholds to rooms, door heights, the top and bottom or stairs, built-in wardrobes, toilet and washbasin etc. have to all be modified. Embodiments are considerably lower, where a 20mm thick 'low build up' panel is used, embodiments could be as low as 12mm. This then becomes much easier to install over an existing floor without interfering with the aforementioned fixtures and fittings; no more difficult than installing a wood or tile floor.

Although illustrative embodiments of the invention have been disclosed in detail herein, with reference to the accompanying drawings, it is understood that the invention is not limited to the precise embodiment and that various changes and modifications can be effected therein by one skilled in the art without departing from the scope of the invention as defined by the appended claims and their equivalents.

## Claims

1. A surface heat-transfer apparatus, comprising:
a first sheet having a first channel for receiving a pipe carrying a heat-transfer fluid, said first channel having a first depth which is less than a diameter of said pipe.

2. The surface heat-transfer apparatus of claim 1, comprising a second sheet having a second channel for receiving said pipe, said second channel having a second depth which is less than said diameter of said pipe.

3. The surface heat-transfer apparatus of claim 2, wherein at least one of said first channel and said second channel are recessed into a major surface of a respective one of said first sheet and said second sheet.

4. The surface heat-transfer apparatus of claim 2 or 3, wherein said pipe, when received in at least one of said first channel and said second channel, protrudes beyond a respective major surface.

5. The surface heat-transfer apparatus of any one of claims 2 to 4, wherein said first sheet and said second sheet are located with said first channel opposing said second channel to surround said pipe when received therein.

6. The surface heat-transfer apparatus of any one of claims 2 to 5, wherein said first depth combined with said second depth is no less than said diameter of said pipe.

7. The surface heat-transfer apparatus of any one of claims 2 to 6, wherein a width of at least one of said first channel and said second channel is one of no less than, matching and less than a diameter of said pipe.

8. The surface heat-transfer apparatus of any one of claims 2 to 7, wherein at least one of said first depth and said second depth is no less than one of a radius of said pipe and said width.

9. The surface heat-transfer apparatus of any one of claims 2 to 8, wherein at least one of said first depth and said second depth matches one of a radius of said pipe and said width.

10. The surface heat-transfer apparatus of any one of claims 2 to 9, comprising gripping elements operable to grip said pipe when received in at least one of said first channel and said second channel.

11. The surface heat-transfer apparatus of claim 10, wherein at least one of said first channel and said second channel deviates in a direction which is transverse to a longitudinal channel axis to provide said gripping elements.

12. The surface heat-transfer apparatus of claim 10 or 11, wherein at least one of said first channel and said second channel deviates alternately opposing directions transverse to said longitudinal channel axis to provide said gripping elements.

13. The surface heat-transfer apparatus of claim 12, wherein at least one of said first channel and said second channel deviates by less than a thickness of a wall of said pipe.

14. The surface heat-transfer apparatus of any one of claims 3 to 13, wherein said major surface of at least one of said first sheet and said second sheet comprises an interlock structure operable to interlock with a complementary interlock structure on another of said first sheet and said second sheet.

15. A method, comprising:
providing a first sheet having a first channel for receiving a pipe carrying a heat-transfer fluid, said first channel having a first depth of which is less than a diameter of said pipe.
